(19) Europäisches Patentamt
European Patent Office
Office européen des brevets

(11) **EP 4 607 458 A1**

(12) **EUROPEAN PATENT APPLICATION**
published in accordance with Art. 153(4) EPC

(43) Date of publication:
**27.08.2025   Bulletin 2025/35**

(21) Application number: **24763091.6**

(22) Date of filing: **26.02.2024**

(51) International Patent Classification (IPC):
***G06T 7/00*** (2017.01)

(52) Cooperative Patent Classification (CPC):
Y02P 90/30

(86) International application number:
**PCT/CN2024/078580**

(87) International publication number:
**WO 2024/179409 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **02.03.2023   CN 202310194447**

(71) Applicant: **Tencent Technology (Shanghai)
Company Limited
Shanghai 201200 (CN)**

(72) Inventors:
• **WANG, Yue
  Shanghai 201200 (CN)**

• **PENG, Jinlong
  Shanghai 201200 (CN)**
• **ZHANG, Jiangning
  Shanghai 201200 (CN)**
• **YI, Ran
  Shanghai 201200 (CN)**
• **WANG, Yabiao
  Shanghai 201200 (CN)**
• **WANG, Chengjie
  Shanghai 201200 (CN)**
• **WU, Yongjian
  Shanghai 201200 (CN)**

(74) Representative: **Reddie & Grose LLP
The White Chapel Building
10 Whitechapel High Street
London E1 8QS (GB)**

(54) **THREE-DIMENSIONAL INDUSTRIAL ANOMALY DETECTION METHOD AND APPARATUS, STORAGE MEDIUM, AND ELECTRONIC DEVICE**

(57)     The present application provides a three-dimensional industrial anomaly detection method and apparatus, a storage medium, and an electronic device. The method comprises: preprocessing a three-dimensional point cloud map of an object to be detected, to obtain a plurality of point cloud groups; performing feature extraction on the plurality of point cloud groups by means of a first feature extractor to obtain point cloud feature groups, generating a point cloud feature map according to the point cloud feature groups and the three-dimensional point cloud map, and projecting the point cloud feature map to form a point cloud projection map with the same size as an RGB image of said object; performing feature extraction on the RGB image by means of a second feature extractor to obtain RGB features; respectively performing feature extraction on the RGB features and point cloud features of the point cloud projection map by means of a multi-layer perceptron, and fusing feature information output by the multi-layer perceptron to obtain a fused feature; and performing anomaly prediction on said object according to the RGB features, the point cloud features and the fused feature to obtain a prediction result of said object. According to the present application, industrial anomalies can be preliminarily screened, and the labor cost of industrial quality inspection is reduced.

FIG. 2

**Description**

RELATED APPLICATION

This application claims priority to Chinese Patent Application No. 202310194447.6, filed with the China National Intellectual Property Administration on March 2, 2023 and entitled "THREE-DIMENSIONAL INDUSTRIAL ANOMALY DETECTION METHOD AND APPARATUS, STORAGE MEDIUM, AND ELECTRONIC DEVICE", which is incorporated herein by reference in its entirety.

FIELD OF THE TECHNOLOGY

This application pertains to the field of anomaly detection technologies, and specifically relates to a three-dimensional industrial anomaly detection technology.

BACKGROUND OF THE DISCLOSURE

Industrial anomaly detection is intended to find an abnormal region of a product, and plays an important role in industrial quality inspection.

During quality inspection of an industrial product, an inspector determines, based on both a three-dimensional shape and color features, whether the product is defective. Information about the three-dimensional shape is quite important and necessary for correct inspection. However, most of existing industrial anomaly detection methods are based on two-dimensional images. For multi-modality industrial anomaly detection based on a three-dimensional point cloud and an RGB image, there are still many fields that are not touched. This results in poor detection performance and poor accuracy of a detection result.

SUMMARY

This application aims to provide a three-dimensional industrial anomaly detection method and apparatus, a storage medium, and an electronic device, to resolve a problem that detection performance and accuracy of a detection result are both poor in multi-modality industrial anomaly detection and that exists in the related art.

Other features and advantages of this application become apparent with the following detailed descriptions, or are partially learned through practice of this application.

According to an aspect of embodiments of this application, a three-dimensional industrial anomaly detection method is provided. The method is performed by an electronic device and includes: obtaining an RGB image and a plurality of point cloud groups of a three-dimensional point cloud map of a to-be-inspected object; performing first feature extraction on each of the plurality of point cloud groups, to obtain a point cloud feature group of the plurality of point cloud groups, and projecting the point cloud feature group to obtain the projected point cloud feature of the plurality of point cloud groups; and performing second feature extraction on the RGB image to obtain an RGB feature; inputting the projected point cloud feature and the RGB feature to a multilayer perceptron, and fusing feature information outputted by the multilayer perceptron to obtain a fused feature; and performing anomaly prediction on the to-be-inspected object based on the RGB feature, the projected point cloud feature, and the fused feature, to obtain a prediction result for the to-be-inspected object.

According to an aspect of embodiments of this application, a three-dimensional industrial anomaly detection apparatus is provided. The apparatus is deployed on an electronic device and includes: an obtaining module, configured to: obtain an RGB image and a plurality of point cloud groups of a three-dimensional point cloud map of a to-be-inspected object; a registration module, configured to: perform first feature extraction on each of the plurality of point cloud groups, to obtain a point cloud feature group of the plurality of point cloud groups, and project the point cloud feature group to obtain the projected point cloud feature of the plurality of point cloud groups; and perform second feature extraction on the RGB image to obtain an RGB feature; a fusion module, configured to: input the projected point cloud feature and the RGB feature to a multilayer perceptron, and fuse feature information outputted by the multilayer perceptron to obtain a fused feature; and a decision-making module, configured to perform anomaly prediction on the to-be-inspected object based on the RGB feature, the projected point cloud feature, and the fused feature, to obtain a prediction result for the to-be-inspected object.

According to an aspect of embodiments of this application, a computer-readable medium is provided. The computer-readable medium has a computer program stored therein. The computer program, when being executed by a processor, implements the three-dimensional industrial anomaly detection method in the foregoing technical solutions.

According to an aspect of embodiments of this application, an electronic device is provided. The electronic device includes: a processor; and a memory, configured to store a computer program of the processor. The processor is configured to perform the three-dimensional industrial anomaly detection method in the foregoing technical solutions by executing the computer program.

According to an aspect of embodiments of this application, a computer program product is provided. The computer program product includes a computer program. The computer program, when being run on a computer, enables the computer to perform the three-dimensional industrial anomaly detection method in the foregoing technical solutions.

According to the three-dimensional industrial anomaly detection method provided in embodiments of this application, after the RGB image and the three-dimensional point cloud map of the to-be-inspected object are obtained, the three-dimensional point cloud map is first pre-processed to obtain the plurality of point cloud groups. Then, features are extracted from the plurality of point cloud groups by the first feature extractor, to obtain the point cloud feature group, the point cloud feature map is generated based on the point cloud feature group and the three-dimensional point cloud map, and the point cloud feature map is projected to form the point cloud projection that is of the same size as the RGB image; and features are extracted from the RGB image by the second feature extractor, to obtain the RGB features. Then, features are extracted separately from the RGB features and the point cloud features of the point cloud projection by the multilayer perceptron, and the feature information outputted by the multilayer perceptron is fused to obtain the fused features. Finally, anomaly prediction is performed on the to-be-inspected object based on the RGB features, the point cloud features, and the fused features, to obtain the prediction result for the to-be-inspected object. According to this application, multi-modality industrial anomaly detection can be performed based on the three-dimensional point cloud map and the RGB image, and the RGB features and the point cloud features are fused, improving interactivity between features and reducing mutual interference between high-dimensional features. In this way, when anomaly prediction is performed on the to-be-inspected object based on the RGB features, the point cloud features, and the fused features, to obtain the prediction result, a more accurate prediction result can be obtained, improving detection performance and accuracy of a detection result. In addition, an unsupervised manner is used in this application. Manual annotation is not required before anomaly detection is performed, saving costs for manual annotation. Moreover, when preliminary screening for an industrial anomaly is performed by using the technical solutions in this application, costs for manual quality inspection can be reduced.

The foregoing general descriptions and the following detailed descriptions are merely for illustrative and explanatory purposes, and are not intended to limit this application.

BRIEF DESCRIPTION OF THE DRAWINGS

Accompanying drawings herein are incorporated into this specification, constitute part of this specification, show embodiments that conform to this application, and are used to explain principles of this application together with this specification. It is clear that the accompanying drawings described below are merely some of embodiments of this application. Without creative efforts, persons of ordinary skill in the art may obtain other drawings based on these accompanying drawings.

FIG. 1 is a schematic diagram of a structure of a system architecture in which a three-dimensional industrial anomaly detection method in an embodiment of this application is used.

FIG. 2 is a schematic flowchart of operations in a three-dimensional industrial anomaly detection method according to an embodiment of this application.

FIG. 3 is a schematic flowchart of performing projection to generate a point cloud projection according to an embodiment of this application.

FIG. 4 is a schematic diagram of a structure of a three-dimensional industrial anomaly detection system according to an embodiment of this application.

FIG. 5 is a schematic flowchart of performing anomaly detection on a cable gland by using a three-dimensional industrial anomaly detection system according to an embodiment of this application.

FIG. 6 schematically shows anomaly representation maps and anomaly locating maps that are determined after anomaly detection is performed on a plurality of to-be-inspected objects according to an embodiment of this application.

FIG. 7 is a schematic flowchart of unsupervisedly training a feature fusion module according to an embodiment of this application.

FIG. 8 is a schematic block diagram of a structure of a three-dimensional industrial anomaly detection apparatus according to an embodiment of this application.

FIG. 9 is a schematic block diagram of a structure of a computer system of an electronic device suitable to be configured to implement an embodiment of this application.

DESCRIPTION OF EMBODIMENTS

The following more comprehensively describes example implementations with reference to the accompanying drawings. However, the example implementations can be implemented in a plurality of forms, and are not to be construed as being limited to examples described herein. On the contrary, these implementations are provided such that this application is more comprehensive and complete and comprehensively conveys the concept of the example implementations to persons skilled in the art.

In addition, the described features, structures, or characteristics may be combined in one or more embodiments in any appropriate manner. In the following descriptions, a lot of specific details are provided to give a full understanding of embodiments of this application. However, persons skilled in the art are to be aware that, the technical solutions in this application may be implemented without one or more of the particular details, or another method, component, apparatus, operation, or the like may be used. In other cases, well-known methods, apparatuses, implementations, or operations are not shown or described in detail, to avoid obscuring the aspects of this application.

The block diagrams shown in the accompanying drawings are merely functional entities and do not necessarily correspond to physically separate entities. To be specific, the functional entities may be implemented in a form of software, or in one or more hardware modules or integrated circuits, or in different networks and/or processor apparatuses and/or microcontroller apparatuses.

The flowcharts shown in the accompanying drawings are merely exemplary descriptions, not all content or operations/steps need to be included, and operations do not need to be performed in the described orders either. For example, some operations/steps may be further broken down, while some operations/steps may be combined or partially combined. Therefore, an actual order of execution may change with an actual case.

In the related art of this application, in an industrial scenario, it is easy to obtain a large quantity of normal instances, but there are quite few defect instances that can be obtained. Most of current industrial anomaly detection methods are unsupervised methods, that is, only normal instances are trained, and only detection instances are tested during inference.

Most of industrial anomaly detection methods provided by the related art are based on two-dimensional images. For multi-modality industrial anomaly detection based on a three-dimensional point cloud and an RGB image, there are still many fields that are not touched. However, during quality inspection of an industrial product, an inspector determines, based on both a three-dimensional shape and color features, whether the product is defective. Information about the three-dimensional shape is quite important and necessary for correct inspection. Even though there are some multi-modality industrial anomaly detection methods in the related art, multimodal features are directly connected in all these methods. When features are high-dimensional, strong interference is generated between the features, compromising detection performance.

A core idea of unsupervised anomaly detection is to find differences between abnormal and normal representations. Current industrial anomaly detection methods may be classified into two categories: reconstruction-based methods and methods that are based on a pre-trained feature extractor. When a reconstruction-based method is used for industrial anomaly detection, for a single-modal input (a two-dimensional image or a three-dimensional point cloud), the reconstruction-based method implements detection quite easily, but for a multimodal input, it is quite difficult to find a reconstruction target. When a method based on a pre-trained feature extractor is used for industrial anomaly detection, extracted features are mapped to a normal distribution, and an out-of-distribution feature is found as an outlier. When the method based on a pre-trained feature extractor is compared with the reconstruction-based method, because a pre-trained feature extractor does not need to be retrained, the pre-trained feature extractor is directly used, with no need to design a multimodal reconstruction target. Therefore, the method based on a pre-trained feature extractor is a good choice for multimodal tasks.

For related technologies in the art, an embodiment of this application provides a three-dimensional industrial anomaly detection method, which is a multi-modality industrial anomaly detection method. In addition, a pre-trained feature extractor is used for industrial anomaly detection in this application, to increase accuracy of locating an industrial anomaly and an abnormal region.

Before the three-dimensional industrial anomaly detection method in this application is described in detail, technical terms that may be used in this application are described.

1. Anomaly detection: Anomaly detection is identification of items, events, or observations that deviate from an expected pattern or other items in a dataset during data mining.

2. Point cloud: A point cloud is a dataset of points on a surface of a product's appearance obtained by using a measuring instrument in reverse engineering.

3. Farthest point sampling: Farthest point sampling is a commonly used sampling algorithm, and is used to uniformly sample M points on a point cloud of N points, so that these points can well represent an overall contour of the point cloud.

4. Inverse distance weight interpolation: Inverse distance weight interpolation is a commonly used, simple, convenient spatial interpolation method, in which a weighted mean is calculated with a distance between an interpolated point and a sample point as a weight, and a larger weight is assigned to a sample point closer to the interpolated point.

5. One-class support vector machine (One-Class SVM): A one-class support vector machine has only one class of training samples, with the training samples being either positive samples or negative samples. A hypersphere with a minimum radius is calculated from trained samples to enclose all test samples. When the hypersphere is used to classify a test set, a sample falling inside the hypersphere belongs to a first class while a sample falling outside the hypersphere belongs to a second class.

Next, an exemplary system architecture is described, in which the technical solutions in this application are used.

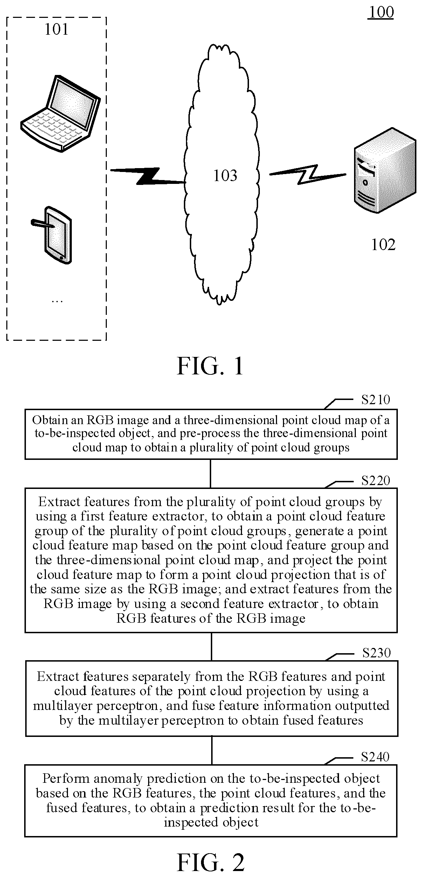

FIG. 1 is a schematic block diagram of an exemplary system architecture in which the technical solutions in this application are used.

As shown in FIG. 1, the system architecture 100 may include a terminal device 101, a server 102, and a network 103. The terminal device 101 may be an electronic device with both a display screen and a photographing unit, such as a smartphone, a tablet computer, a notebook computer, a smart TV, or a smart vehicle-mounted terminal. Besides, the terminal device 101 may further include an electronic device with a display screen and a photographing apparatus connected to the electronic device. The server 102 may be a standalone physical server, or may be a server cluster or a distributed system that includes a plurality of physical servers, or may be a cloud server that provides cloud computing services. The network 103 may be a communication medium of various connection types that can provide a communication link between the terminal device 101 and the server 102, for example, may be a wired communication link or a wireless communication link.

Based on implementation requirements, the system architecture in this embodiment of this application may have any quantities of terminal devices, networks, and servers. For example, the server may be a server group that includes a plurality of server devices. In addition, the technical solutions provided in embodiments of this application may be used on the terminal device 101.

In an embodiment of this application, a to-be-inspected object is photographed by the photographing apparatus or photographing unit, to obtain an RGB image and an initial point cloud map of the to-be-inspected object, and then the RGB image and the initial point cloud map that are obtained through photographing may be sent to the electronic device with a display screen in the terminal device 101. The electronic device may transmit the RGB image and the initial point cloud map to the server 102 over the network 103. For the initial point cloud map, the server 102 may retain only point coordinate information in the initial point cloud map, to form a three-dimensional point cloud map; then pre-process the three-dimensional point cloud map, to obtain, through farthest point sampling and nearest neighbor sampling, a plurality of point cloud groups corresponding to the three-dimensional point cloud map; then encode all the point cloud groups by using a first feature extractor, to obtain a point cloud feature group; and finally interpolate the point cloud feature group back into the three-dimensional point cloud map, to generate a point cloud feature map, and project the point cloud feature map to form a point cloud projection that is of the same size as the RGB image. For the RGB image, the server 102 may input the RGB image into a second feature extractor for encoding, to obtain RGB features. Then, in the server 102, the RGB features and point cloud features of the point cloud projection may be separately inputted into a multilayer perceptron for feature extraction, and feature information outputted by the multilayer perceptron may be fused to obtain fused features; and finally, anomaly prediction may be performed on the to-be-inspected object based on the RGB features, the point cloud features, and the fused features, to obtain a prediction result for the to-be-inspected object. The prediction result may reflect whether the to-be-inspected object has an anomaly. The prediction result herein is a detection result of industrial anomaly detection. Content of the prediction result is not limited in embodiments of this application. In a possible implementation, the prediction result may include at least one of an anomaly score and an anomaly representation map.

In an embodiment of this application, the first feature extractor and the second feature extractor are pre-trained feature extractors and belong to machine learning models. The machine learning models relate to artificial intelligence, and three-dimensional industrial anomaly detection is automatically implemented through artificial intelligence. In a process of three-dimensional industrial anomaly detection, the first feature extractor and the second feature extractor are trained by using machine learning in artificial intelligence technologies, and feature extraction is implemented by using a computer vision technology in the artificial intelligence technologies.

In an embodiment of this application, the server 102 in this application may be a cloud server that provides cloud computing services. In other words, this application relates to cloud storage and cloud computing technologies.

Cloud storage is a new concept that extends and develops from a concept of cloud computing. A distributed cloud storage system (referred to as a storage system for short hereinafter) is a storage system that pools a large quantity of storage devices of various different types (storage devices are also referred to as storage nodes) across networks through application software or application interfaces for collaborative work by using functions such as a cluster application, a grid technology, and a distributed storage file system, to jointly provide data storage and service access functions to the outside.

Cloud computing is a mode of computing, in which computing tasks are distributed across a resource pool including a large quantity of computers, so that various application systems can obtain computing power, storage space, and information services as needed. A network providing resources is referred to as a "cloud". For a perspective of a user, the resources in the "cloud" are infinitely scalable, can be obtained at any time, can be used on demand, can be scaled at any time, and can be paid for as you go.

In combination with specific implementations, the following describes in detail the technical solutions provided in this application such as the three-dimensional industrial anomaly detection method, the three-dimensional industrial anomaly detection apparatus, the computer-readable medium, and the electronic device.

FIG. 2 is a schematic flowchart of operations in a three-dimensional industrial anomaly detection method according to an embodiment of this application. The three-dimensional industrial anomaly detection method is performed by a server. The server may be specifically the server 102 in FIG. 1. As shown in FIG. 2, the three-dimensional industrial anomaly detection method in this embodiment of this application may mainly include the following S210 to S240:

S210: Obtain an RGB image and a three-dimensional point cloud map of a to-be-inspected object, and pre-process the three-dimensional point cloud map to obtain a plurality of point cloud groups.

S220: Extract features from the plurality of point cloud groups by using a first feature extractor, to obtain a point cloud feature group of the plurality of point cloud groups, generate a point cloud feature map based on the point cloud feature group and the three-dimensional point cloud map, and project the point cloud feature map to form a point cloud projection that is of the same size as the RGB image; and extract features from the RGB image by using a second feature extractor, to obtain RGB features of the RGB image.

S230: Extract features separately from the RGB features and point cloud features of the point cloud projection by using a multilayer perceptron, and fuse feature information outputted by the multilayer perceptron to obtain fused features.

S240: Perform anomaly prediction on the to-be-inspected object based on the RGB features, the point cloud features, and the fused features, to obtain a prediction result for the to-be-inspected object.

In the three-dimensional industrial anomaly detection method provided in this embodiment of this application, after the RGB image and the three-dimensional point cloud map of the to-be-inspected object are obtained, the three-dimensional point cloud map is first pre-processed to obtain the plurality of point cloud groups. Then, features are extracted from the plurality of point cloud groups by the first feature extractor, to obtain the point cloud feature group, the point cloud feature map is generated based on the point cloud feature group and the three-dimensional point cloud map, and the point cloud feature map is projected to form the point cloud projection that is of the same size as the RGB image; and features are extracted from the RGB image by the second feature extractor, to obtain the RGB features. Then, features are extracted separately from the RGB features and the point cloud features of the point cloud projection by the multilayer perceptron, and the feature information outputted by the multilayer perceptron is fused to obtain the fused features. Finally, anomaly prediction is performed on the to-be-inspected object based on the RGB features, the point cloud features, and the fused features, to obtain the prediction result for the to-be-inspected object. According to this application, multi-modality industrial anomaly detection can be performed based on the three-dimensional point cloud map and the RGB image, and the RGB features and the point cloud features are fused, improving interactivity between features and reducing mutual interference between high-dimensional features. In this way, when anomaly prediction is performed on the to-be-inspected object based on the RGB features, the point cloud features, and the fused features, to obtain the prediction result, a more accurate prediction result can be obtained, improving detection performance and accuracy of a detection result. In addition, an unsupervised manner is used in this application. Manual annotation is not required before anomaly detection is performed, saving costs for manual annotation. Moreover, when preliminary screening for an industrial anomaly is performed by using the technical solutions in this application, costs for manual quality inspection can be reduced.

The following describes in detail specific implementations of the method operations in the three-dimensional industrial anomaly detection method in this embodiment of this application.

S210: Obtain an RGB image and a three-dimensional point cloud map of a to-be-inspected object, and pre-process the three-dimensional point cloud map to obtain a plurality of point cloud groups.

In an embodiment of this application, the to-be-inspected object may be any object that needs to be inspected in an industrial quality inspection scenario, for example, a machine part, a melon, fruit, a vegetable, processed food, a craft, or a rope. After a to-be-inspected object is obtained, the to-be-inspected object may be photographed by different cameras, to obtain an initial point cloud map and an RGB image of the to-be-inspected object. Specifically, the to-be-inspected object may be photographed by a two-dimensional camera, for example, an area scan camera, to obtain the RGB image; and the to-be-inspected object may be photographed by a three-dimensional camera, for example, a laser line scan camera, to obtain the initial point cloud map.

In an embodiment of this application, after the initial point cloud map is obtained, coordinates in the initial point cloud map may be retained to form a three-dimensional point cloud map, and the three-dimensional point cloud map may be pre-processed, to obtain a plurality of point cloud groups corresponding to the three-dimensional point cloud map. Coordinate retaining is a process of retaining point coordinates and deleting other information in the initial point cloud map, for example, deleting color information in the initial point cloud map, or deleting color information and laser reflection information in the initial point cloud map. Pre-processing may be specifically performing sampling on the three-dimensional point cloud map twice. Specifically, farthest point sampling is first performed on the three-dimensional point cloud map, to obtain a first quantity of sampling points; nearest neighbor sampling is then performed, with each sampling point as a center point, to obtain a second quantity of feature points related to each sampling point; and finally, the point cloud groups are formed based on each sampling point and the feature points related to the sampling point. The first quantity and the second quantity are integers greater than 1 and are both less than a quantity of points included in the three-dimensional point cloud map. In this embodiment of this application, nearest neighbor sampling is to obtain a point nearest to a center point and use the point as a feature point.

S220: Extract features from the plurality of point cloud groups by using a first feature extractor, to obtain a point cloud feature group of the plurality of point cloud groups, generate a point cloud feature map based on the point cloud feature group and the three-dimensional point cloud map, and project the point cloud feature map to form a point cloud projection that is of the same size as the RGB image; and extract features from the RGB image by using a second feature extractor, to obtain RGB features of the RGB image.

In an embodiment of this application, after the plurality of point cloud groups obtained through pre-processing are obtained, a point cloud group sequence formed by the point cloud groups may be inputted into the first feature extractor for feature extraction, to obtain a three-dimensional representation corresponding to each point cloud group, and the point cloud feature group corresponding to the three-dimensional point cloud map can be formed based on the three-dimensional representation corresponding to each point cloud group.

In this embodiment of this application, when the plurality of point cloud groups form the point cloud group sequence, the point cloud group sequence may be generated by ordering, based on center points in the point cloud groups, positions in a point position sequence formed by all points in the three-dimensional point cloud map. The first feature extractor is a pre-trained feature extractor. Specifically, a self-attention network transformer model may be used as the first feature extractor. After the point cloud group sequence is inputted into the transformer model, the transformer model can encode a point cloud group based on information about another point cloud group that is related to the point cloud group, to output a feature vector corresponding to the point cloud group. Because the transformer model can encode each point cloud group, the transformer model can output the same quantity of point cloud features accordingly. When M sampling points are obtained by performing farthest point sampling, and M point cloud groups are obtained by performing nearest neighbor sampling based on the M sampling points, the M point cloud groups may be encoded by the transformer model, to output M point cloud features. Further, the M point cloud features form a point cloud feature group. In addition, because each point cloud group is obtained by performing nearest neighbor sampling with any one of the M sampling points as a center point, each point cloud feature in the point cloud feature group may be considered as a feature of a corresponding center point. The first feature extractor may alternatively be another pre-trained feature extractor, for example, ResNet or Swin-Transformer. This is not specifically limited in this embodiment of this application.

Because the sampling points are not evenly distributed in space after farthest point sampling is performed, a density of the point cloud features is not balanced. In addition, there is spatial inconsistency with a grid form of the RGB image. To align spatial positions of the point cloud features with those of image features of the RGB image, so as to facilitate subsequent fusion of color features of the RGB image and the point cloud features of the three-dimensional point cloud map, the point cloud features need to be registered first. In a possible implementation, a registration manner may be as follows: interpolating the point cloud feature group back into the three-dimensional point cloud map based on inverse distance weights, to obtain the point cloud feature map; and then projecting the point cloud feature map to form the point cloud projection that is of the same size as the RGB image. In this way, spatial positions of the point cloud features in the point cloud projection can be aligned with those of the image features of the RGB image.

The following specifically describes a method for performing interpolation to generate a point cloud feature map and a method for performing projection to generate a point cloud projection.

In an embodiment of this application, a point cloud feature group is interpolated back into a three-dimensional point cloud map by using the inverse distance weight interpolation method, to generate a point cloud feature map. The following is assumed: A point cloud feature group G outputted by the transformer model includes M point cloud features $g_i$ (i=1,2,...,M), the M point cloud features respectively correspond to M sampling points (center points) $c_i$ (i=1,2,...,M), a three-dimensional point cloud map includes N points $p_j$ (j=1,2,...,N), a rasterized point cloud feature map can be generated by interpolating the M point cloud features back into the three-dimensional point cloud map, and point cloud features corresponding to points in the point cloud feature map are $p'_j$ (j=1,2,...,N).

In an embodiment of this application, the point cloud features $p'_j$, weights $\alpha_i$, the point cloud features $g_i$ corresponding to the sampling points $c_i$, and the first quantity M satisfy a first relational expression: $p'_j = \sum_{i=1}^{M} \alpha_i g_i$, $j \in \{1,2, ..., N\}$; and the weights $\alpha_i$, the sampling points $c_i$, points $p_j$ corresponding to the sampling points $c_i$ in the point cloud feature map, a minimal constant $\varepsilon$, all sampling points $c_k$, and all points $p_t$ in the three-dimensional point cloud map satisfy a second relational expression:

$$\alpha_i = \frac{\dfrac{1}{\|c_i - p_j\|_2 + \varepsilon}}{\sum_{k=1}^{M} \sum_{t=1}^{N} \dfrac{1}{\|c_k - p_t\|_2 + \varepsilon}}$$

It can be learned through analysis of the first relational expression and the second relational expression that the weights $\alpha_i$ corresponding to the sampling points $c_i$ are calculated based on a first 2-norm and a second 2-norm, the first 2-norm is determined based on coordinates of the sampling points $c_i$ and coordinates of the points $p_j$ corresponding to the sampling points $c_i$ in the three-dimensional point cloud map, the second 2-norm is determined based on coordinates of all the sampling points $c_k$ and coordinates of all the points $p_t$ in the three-dimensional point cloud map, and the minimal constant $\varepsilon$ is set to avoid having a denominator of 0.

When $\sum_{k=1}^{M} \sum_{t=1}^{N} \frac{1}{\|c_k - p_t\|_2 + \varepsilon}$ is operated, for each sampling point $c_k$, a 2-norm between coordinates of the sampling point $c_k$ and coordinates of $p_t$ (t=1,2,...,N) needs to be calculated, and then each $c_k$ obtained when k=1,2,...,M is traversed based on the logic, to obtain a final calculation result. Because $c_k$ and $p_t$ do not change, the second expression has the same denominator each time the weight $\alpha_i$ is calculated. After the weights $\alpha_i$ corresponding to the sampling points $c_i$ are determined, interpolation may be performed, based on the weights $\alpha_i$, on the point cloud features $g_i$ corresponding to the sampling points $c_i$, to obtain the post-interpolation point cloud features $p'_j$ corresponding to the points $p_j$.

In an embodiment of this application, after interpolation is performed, the point cloud feature map is still a feature map corresponding to three-dimensional space. To facilitate alignment with the image features of the RGB image in space, the point cloud feature map needs to be projected onto a two-dimensional plane, to construct a point cloud projection that is of the same size as the RGB image. During projection, the point cloud features in the point cloud feature map may be projected onto the two-dimensional plane based on point coordinates and camera parameters.

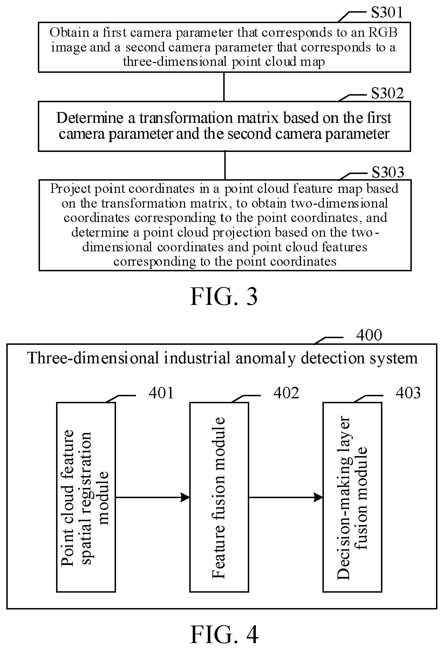

FIG. 3 is a schematic flowchart of performing projection to generate a point cloud projection. As shown in FIG. 3: S301: obtain a first camera parameter that corresponds to the RGB image and a second camera parameter that corresponds to the three-dimensional point cloud map; S302: determine a transformation matrix based on the first camera parameter and the second camera parameter; and S303: project point coordinates in the point cloud feature map based on the transformation matrix, to obtain two-dimensional coordinates corresponding to the point coordinates, and determine the point cloud projection based on the two-dimensional coordinates and point cloud features corresponding to the point coordinates.

Because photographing apparatuses that perform photographing to generate the RGB image and the three-dimensional point cloud map are different, corresponding camera parameters are also different. The camera parameters may include, for example, a focal length, an aperture, and a camera coordinate system. For ease of description, a camera parameter corresponding to the RGB image is taken as a first camera parameter, and a camera parameter corresponding to the three-dimensional point cloud map is taken as a second camera parameter. After the first camera parameter and the second camera parameter are obtained, a transformation matrix may be determined based on the first camera parameter and the second camera parameter. The transformation matrix may transform point coordinates in the three-dimensional space into point coordinates on a two-dimensional plane. Then, based on the transformation matrix, point coordinates of points in the point cloud feature map may be projected onto a two-dimensional plane, and point cloud features $p'_j$ corresponding to the point coordinates may also be projected to corresponding point coordinates on the two-dimensional plane. Then, a point cloud projection can be determined based on two-dimensional coordinates and the point cloud features that correspond to the point coordinates. A size of the point cloud projection is the same as that of the RGB image.

In an embodiment of this application, because a point cloud may be sparse, there is a point that matches the point cloud feature map on the two-dimensional plane, and there is also a point that does not match the point cloud feature map. In this case, during projection, a value of a pixel of a point that is in the point cloud projection and that matches the point cloud feature map may be set to a non-zero value, and a value of a pixel of a point that is in the point cloud projection and that does not match the point cloud feature map may be set to 0. For example, a position that is on the two-dimensional plane and on which there is no to-be-inspected object is a point that does not match the point cloud feature map, and the position may be marked as 0.

In an embodiment of this application, features may also be extracted from the RGB image by using the second feature extractor, to obtain the RGB features, while the following is performed: pre-processing the three-dimensional point cloud map to obtain the plurality of point cloud groups, extracting features from the point cloud groups by using the first feature extractor, to obtain the point cloud feature group, performing inverse distance weight interpolation on the three-dimensional point cloud map based on the point cloud feature group, to generate the point cloud feature map, and projecting the point cloud feature map to generate the point cloud projection. The second feature extractor is also a pre-trained feature extractor. For example, the second feature extractor may be a pre-trained self-attention network transformer model, or certainly may be another pre-trained self-attention network model. This is not specifically limited in this application.

In an embodiment of this application, because a purpose of this application is to detect an industrial anomaly, to present a position of an anomaly of the to-be-inspected object more accurately, the prediction result may include an anomaly score and an anomaly representation map. To obtain an anomaly score for a position at which an anomaly exists and that is of the to-be-inspected object, locate the position at which an anomaly exists, and output an anomaly representation map, the point cloud projection and the RGB image may be divided during detection. The point cloud projection is divided into a plurality of tiles, and the RGB image is divided into a plurality of patches. Then, detection for an industrial anomaly is performed based on tile point cloud features corresponding to the tiles and RGB features corresponding to the patches. In this embodiment of this application, the point cloud projection and the RGB image are divided according to the same criterion. Therefore, the tiles in the point cloud projection and the patches in the RGB images correspond to each other on a one-to-one basis, and the point cloud features and the RGB features can be aligned.

In an embodiment of this application, the point cloud projection may be divided into a plurality of tiles according to a preset division criterion, and then average pooling may be performed on point cloud projections corresponding to the tiles, to obtain tile point cloud features corresponding to each tile; and accordingly, the point cloud features of the point cloud projection can be obtained based on the tile point cloud features corresponding to all the tiles. Likewise, the RGB image may be divided according to the preset division criterion, to obtain patches corresponding to the RGB image; then the patches may be simultaneously inputted into the second feature extractor, and features may be extracted from the patches separately by using the second feature extractor, to obtain RGB features corresponding to each patch; and the RGB features corresponding to the RGB image can be obtained based on the RGB features corresponding to all the patches.

In an embodiment of this application, when the three-dimensional point cloud map and the RGB image that correspond to the to-be-inspected object are obtained, the tiles in the point cloud projection and the patches in the RGB images correspond to each other on a one-to-one basis. To be specific, each tile corresponds to one patch, different tiles correspond to different patches, and the tile and the patch that correspond to each other have the same index. In other words, an index i may be set for the three-dimensional point cloud map and the RGB image that are of the to-be-inspected object. When the three-dimensional point cloud map is processed to generate the point cloud projection, the index i does not change. After the point cloud projection is divided to generate the tiles and the RGB image is divided to generate the patches, an index j may be set for each tile and each patch according to a specific sequential rule. In addition, a tile and a patch that correspond to the same position in the point cloud projection and the RGB image have the same index. Based on the index i and the index j, a tile can be uniquely determined from the point cloud projection corresponding to the index i, and a patch can be uniquely determined from the RGB image corresponding to the index i. Further, fusion may be performed based on point cloud features corresponding to the tile and RGB features corresponding to the patch, to extract information about interaction between two modalities.

S230: Extract features separately from the RGB features and the point cloud features of the point cloud projection by using a multilayer perceptron, and fuse feature information outputted by the multilayer perceptron to obtain fused features.

In an embodiment of this application, after the point cloud projection and the RGB image are divided and indices are set, the RGB features and the point cloud features of the point cloud projection may be separately inputted into the multilayer perceptron for feature extraction, and then feature information outputted by the multilayer perceptron may be fused, to obtain fused features in which color information and position information are fused. Because the tiles in the point cloud projection and the patches in the RGB images correspond to each other on a one-to-one basis, and a tile and a patch that correspond to each other have the same index, features may be extracted from the RGB features of the patches and the tile point cloud features of the tiles by using the multilayer perceptron, to obtain first feature information of the patches and second feature information of the tiles, there being correspondences between the patches and the tiles; and further the first feature information of the patches and the second feature information of the tiles may be fused to obtain the fused features, there being correspondences between the patches and the tiles. The fused features include color features of the patches and the point cloud features of the tiles, there being correspondences between the patches and the tiles. In other words, the fused features include information about interaction between two modalities.

For ease of description, in this embodiment of this application, point cloud features corresponding to tiles are denoted as $f_{pt}^{(i,j)}$, RGB features corresponding to patches are denoted as $f_{rgb}^{(i,j)}$, and fused features are denoted as $f_{fs}^{(i,j)}$, where i is an index of the to-be-inspected object, and j is an index of the patch or tile; and the multilayer perceptron includes a first multilayer perceptron $\chi_{pt}$ and a second multilayer perceptron $\chi_{rgb}$ that are configured to extract features from the point cloud features. Correspondingly, $f_{fs}^{(i,j)} = \chi_{pt}\left(f_{pt}^{(i,j)}\right) \oplus \chi_{rgb}(f_{rgb}^{(i,j)})$.

Fused features corresponding to the RGB image and the point cloud projection can be obtained by extracting features from the RGB features corresponding to all the patches and the point cloud features corresponding to all the tiles and fusing the features.

S240: Perform anomaly prediction on the to-be-inspected object based on the RGB features, the point cloud features, and the fused features, to obtain a prediction result for the to-be-inspected object.

In an embodiment of this application, after the RGB features corresponding to the RGB image, the point cloud features corresponding to the point cloud projection, and the fused features corresponding to the RGB image and the point cloud projection are obtained, the RGB features, the point cloud features, and the fused features may be inputted into a decision-making layer. Three memory banks are set in the decision-making layer: a first memory bank, a second memory bank and a third memory bank. The first memory bank is configured to store original color features of an inspected object, the second memory bank is configured to store point cloud features of the inspected object, and the third memory bank is configured to store fused features of the inspected object. After the RGB features, point cloud features, and fused features that correspond to the to-be-inspected object are inputted into the decision-making layer, anomaly prediction may be performed on the to-be-inspected object based on the memory banks in the decision-making layer and the RGB features, point cloud features, and fused features that correspond to the to-be-inspected object, to obtain a prediction result for the to-be-inspected object. In this case, the prediction result includes an anomaly score and an anomaly representation map. When anomaly prediction is performed on the to-be-inspected object based on the memory banks in the decision-making layer and the RGB features, point cloud features, and fused features that correspond to the to-be-inspected object, accuracy of anomaly detection can be improved.

In an embodiment of this application, because the three memory banks respectively correspond to the original color features, the point cloud features, and the fused features, anomaly prediction may be performed on the to-be-inspected object from a dimension of colors based on the first memory bank and the RGB features, anomaly prediction may be performed on the to-be-inspected object from a dimension of positions based on the second memory bank and the point cloud features, and anomaly prediction may be performed on the to-be-inspected object from a dimension of feature fusion based on the third memory bank and the fused features. Further, prediction information from the three dimensions is considered together, to obtain an anomaly score and an anomaly representation map that correspond to the to-be-inspected object.

Because prediction of an anomaly score and prediction of an anomaly representation map are two tasks, two learnable one-class support vector machines Da and Ds may be used in this embodiment of this application to make decisions on the anomaly score and the anomaly representation map. Specifically, when an anomaly score is predicted, a first anomaly score for the to-be-inspected object may be determined based on a first scoring function, the first memory bank, and the RGB features, a second anomaly score for the to-be-inspected object may be determined based on the first scoring function, the second memory bank, and the point cloud features, and a third anomaly score for the to-be-inspected object may be determined based on the first scoring function, the third memory bank, and the fused features; and then the first anomaly score, the second anomaly score, and the third anomaly score may be inputted into the first one-class support vector machine Da, to obtain the anomaly score for the to-be-inspected object.

When an anomaly representation map is predicted, a first anomaly segmentation map score for the to-be-inspected object may be determined based on a second scoring function, the first memory bank, and the RGB features, a second anomaly segmentation map score for the to-be-inspected object may be determined based on the second scoring function, the second memory bank, and the point cloud features, and a third anomaly segmentation map score for the to-be-inspected object may be determined based on the second scoring function, the third memory bank, and the fused features; then the first anomaly segmentation map score, the second anomaly segmentation map score, and the third anomaly segmentation map score may be inputted into the second one-class support vector machine Ds, to obtain a segmentation map on which an anomaly exists for the to-be-inspected object; and finally the segmentation map on which an anomaly exists may be marked with a color that is different from a color of a normal segmentation map, to obtain the anomaly representation map.

An expression of the first scoring function is: $\phi(M, f) = \eta\|f^{(i,j),*} - m^*\|_2$, where

$$f^{(i,j),*}, m^* = \arg\max_{f^{(i,j)} \in f} \arg\min_{m \in M} \|f^{(i,j)} - m\|_2$$, M is the first memory bank, the second memory bank, or the third memory bank, f is the RGB features, the point cloud features, or the fused features, $\eta$ is a weight parameter, i is an index corresponding to the RGB image or the point cloud projection, and j is an index corresponding to a patch in the RGB image or a tile in the point cloud projection.

An expression of the second scoring function is: $\varphi(M,f) = \{\min_{m \in M}\|f^{(i,j)} - m\|_2 \mid f^{(i,j)} \in f\}$, where M is the first memory bank, the second memory bank, or the third memory bank, f is the RGB features, the point cloud features, or the fused features, i is an index of the RGB image, and j is an index corresponding to a patch in the RGB image.

It can be learned based on the expression of the first scoring function that: when f is the RGB features $f^{(i,j)}_{rgb}$, the first memo bank $M_{rgb}$ may be obtained, $m_{rgb}$ existing when $\|f^{(i,j)}_{rgb} - m_{rgb}\|_2$ has a minimum value may be determined as $m^*$ and $f^{(i,j)}_{rgb}$ existing when $\|f^{(i,j)}_{rgb} - m_{rgb}\|_2$ has a maximum value may be determined as $f^{(i,j),*}$ based on $f^{(i,j)}_{rgb}$ and each original color feature in $M_{rgb}$, and then the first anomaly score $\phi(M_{rgb}, f_{rgb})$ may be determined based on the weight parameter $\eta$, $m^*$, and $f^{(i,j),*}$; when f is the point cloud features $f^{(i,j)}_{pt}$, the second memory bank $M_{pt}$ may be obtained, $m_{pt}$ existing when $\|f^{(i,j)}_{pt} - m_{pt}\|_2$ has a minimum value may be determined as $m^*$ and $f^{(i,j)}_{pt}$ existing when $\|f^{(i,j)}_{pt} - m_{pt}\|_2$ has a maximum value may be determined as $f^{(i,j),*}$ based on $f^{(i,j)}_{pt}$ and each point cloud feature in $M_{pt}$, and then the second anomaly score $\phi(M_{pt}, f_{pt})$ may be determined based on the weight parameter $\eta$, $m^*$, and $f^{(i,j),*}$; and correspondingly, when f is the fused features $f^{(i,j)}_{fs}$, the third memory bank $M_{fs}$ may be obtained, $m_{fs}$ existing when $\|f^{(i,j)}_{fs} - m_{fs}\|_2$ has a minimum value may be determined as $m^*$ and $f^{(i,j)}_{fs}$ existing when $\|f^{(i,j)}_{fs} - m_{fs}\|_2$ has a maximum value may be determined as $f^{(i,j),*}$ based on $f^{(i,j)}_{fs}$ and each fused feature in $M_{fs}$, and then the third anomaly score $\phi(M_{fs}, f_{fs})$ may be determined based on the weight parameter $\eta$, $m^*$, and $f^{(i,j),*}$.

It can be learned based on the expression of the second scoring function that: when f is the RGB features $f^{(i,j)}_{rgb}$, the first memory bank $M_{rgb}$ may be obtained, and $m_{rgb}$ existing when $\|f^{(i,j)}_{rgb} - m_{rgb}\|_2$ has a minimum value may be determined as the first anomaly segmentation map score $\varphi(M_{rgb}, f_{rgb})$ based on $f^{(i,j)}_{rgb}$ and each original color feature in $M_{rgb}$; when f is the point cloud features $f^{(i,j)}_{pt}$, the second memory bank $M_{pt}$ may be obtained, and $m_{pt}$ existing when

$\|f_{pt}^{(i,j)} - m_{pt}\|_2$ has a minimum value may be determined as the second anomaly segmentation map score $\varphi(M_{pt},$ $f_{pt})$ based on $f_{pt}^{(i,j)}$ and each point cloud feature in $M_{pt}$; and correspondingly, when f is the fused features $f_{fs}^{(i,j)}$, the third memory bank $M_{fs}$ may be obtained, and $m_{fs}$ existing when $\|f_{fs}^{(i,j)} - m_{fs}\|_2$ has a minimum value may be determined as the third anomaly segmentation map score $\varphi(M_{fs}, f_{fs})$ based on $f_{fs}^{(i,j)}$ and each fused feature in $M_{fs}$.

After the first anomaly score $\phi(M_{rgb}, f_{rgb})$, the second anomaly score $\phi(M_{pt}, f_{pt})$, and the third anomaly score $\phi(M_{fs}, f_{fs})$ are obtained, the three scores may be inputted into the first one-class support vector machine, to obtain the anomaly score, with an expression being: a=Da($\phi(M_{rgb}, f_{rgb})$, $\phi(M_{pt}, f_{pt})$, $\phi(M_{fs}, f_{fs})$). In addition, after the first anomaly segmentation map score $\varphi(M_{rgb}, f_{rgb})$, the second anomaly segmentation map score $\varphi(M_{pt}, f_{pt})$, and the third anomaly segmentation map score $\varphi(M_{fs}, f_{fs})$ are obtained, the three scores may be inputted into the second one-class support vector machine, to obtain a segmentation map on which an anomaly exists, with an expression being: s=Ds($\varphi(M_{rqb}, f_{rgb})$, $\varphi(M_{pt}, f_{pt})$, $\varphi(M_{fs}, f_{fs})$).

According to three-dimensional industrial anomaly detection in this embodiment of this application, a position at which an anomaly may exist and that is on a to-be-inspected object can be marked out. In some cases, the to-be-inspected object may have a notch, a gap, or the like. To avoid a false determining problem that the notch, gap, or the like is determined as an anomaly, the three-dimensional industrial anomaly detection method in this embodiment of this application may be used in preliminary screening for an industrial anomaly. After a prediction result (for example, an anomaly score and an anomaly representation map) is obtained for the to-be-inspected object, manual quality inspection may be further performed to check whether the to-be-inspected object really has an anomaly. Although manual quality inspection still needs to be performed after an anomaly score and an anomaly representation map are obtained by using the technical solutions in this application, costs for manual quality inspection are greatly reduced because of the following reasons: Industrial anomaly detection can be performed based on a three-dimensional point cloud and color information in this application, improving accuracy of anomaly prediction; and manual quality inspection needs to be performed only for a to-be-inspected object for which it is determined that an anomaly exists, and does not need to be performed for all to-be-inspected objects.

In an embodiment of this application, a memory bank is generated through random sampling. Specifically, the first memory bank, the second memory bank, or the third memory bank is generated by performing random sampling on RGB features, point cloud features, or fused features of a large quantity of samples. Partial data is selected from a large amount of data through random sampling to form a memory bank, reducing an amount of data to be processed and improving efficiency of data processing.

The three-dimensional industrial anomaly detection method in this application may be implemented by a three-dimensional industrial anomaly detection system. FIG. 4 is a schematic diagram of a structure of a three-dimensional industrial anomaly detection system. As shown in FIG. 4, the three-dimensional industrial anomaly detection system 400 includes a point cloud feature spatial registration module 401, a feature fusion module 402, and a decision-making layer fusion module 403. The point cloud feature spatial registration module 401 is configured to process a three-dimensional point cloud map to generate a point cloud projection that is of the same size as an RGB image. The feature fusion module 402 is configured to fuse RGB features in the RGB image and point cloud features in the point cloud projection to generate fused features. The decision-making layer fusion module 403 is configured to perform anomaly prediction on a to-be-inspected object based on the RGB features, the point cloud features, the fused features, and preset memory banks, to obtain an anomaly score and an anomaly representation map that correspond to the to-be-inspected object.

Next, a detection procedure of the three-dimensional industrial anomaly detection system is described in detail by using an example in which three-dimensional industrial anomaly detection is performed on a cable gland.

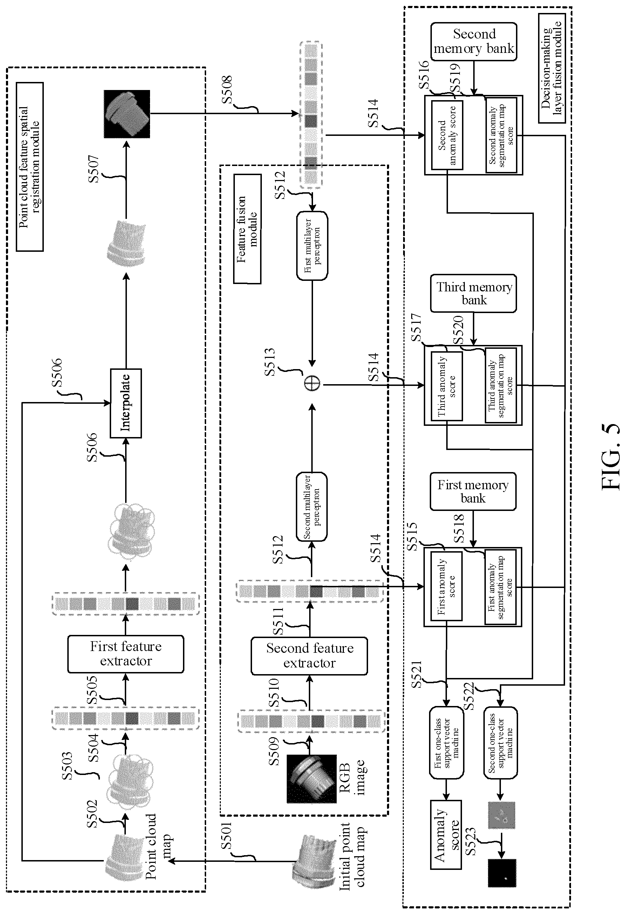

FIG. 5 is a schematic flowchart of performing anomaly detection on a cable gland by using a three-dimensional industrial anomaly detection system. As shown in FIG. 5: S501: after obtaining an RGB image and an initial point cloud map that correspond to a cable gland, process the initial point cloud map, to obtain a three-dimensional point cloud map including only point coordinate information; S502: input the three-dimensional point cloud map into a point cloud feature spatial registration module, so that the point cloud feature spatial registration module performs S503 to S508 on the three-dimensional point cloud map; S503: perform farthest point sampling and nearest neighbor sampling on the three-dimensional point cloud map, to generate a plurality of point cloud groups; S504: arrange the plurality of point cloud groups according to a preset ordering rule, to form a point cloud group sequence; S505: input the point cloud group sequence into a first feature extractor for feature extraction, to obtain a point cloud feature group; S506: interpolate the point cloud feature group back into the three-dimensional point cloud map, to generate a point cloud feature map; S507: project the point cloud feature map, to generate a point cloud projection that is of the same size as the RGB image; S508: divide the point cloud projection into a plurality of tiles according to a preset division criterion, and perform average pooling on point cloud features corresponding to each tile, to obtain tile point cloud features corresponding to each tile; S509: input the RGB image into a feature fusion module, so that the feature fusion module performs S510 to S513 on the RGB image; S510: divide the RGB image into a plurality of patches according to the preset division criterion, and input a patch sequence formed by the plurality of patches into a second feature extractor; S511: extract features by using the second feature extractor, to output RGB features corresponding to each patch; S512: input the tile point cloud features corresponding to each tile into a first multilayer perceptron for feature extraction, to obtain first feature information, and input the RGB features corresponding to each patch into a second multilayer perceptron for feature extraction, to obtain second feature information; S513: fuse first feature information and second feature information that correspond to the same position, to obtain fused features; S514: input the RGB features corresponding to each patch, the tile point cloud features corresponding to each tile, and the fused features corresponding to each patch/tile into a decision-making layer fusion module, so that the decision-making layer fusion module performs S515 to S522 on the RGB features, the point cloud features, and the fused features; S515: determine, based on a first scoring function, a first memory bank, and the RGB features, a first anomaly score corresponding to the cable gland; S516: determine, based on the first scoring function, a second memory bank, and the point cloud features, a second anomaly score corresponding to the cable gland; S517: determine, based on the first scoring function, a third memory bank, and the fused features, a third anomaly score corresponding to the cable gland; S518: determine, based on a second scoring function, the first memory bank, and the RGB features, a first anomaly segmentation map score corresponding to the cable gland; S519: determine, based on the second scoring function, the second memory bank, and the point cloud features, a second anomaly segmentation map score corresponding to the cable gland; S520: determine, based on the second scoring function, the third memory bank, and the fused features, a third anomaly segmentation map score corresponding to the cable gland; S521: input the first anomaly score, the second anomaly score, and the third anomaly score into a first one-class support vector machine, to obtain an anomaly score corresponding to the cable gland; and S522: input the first anomaly segmentation map score, the second anomaly segmentation map score, and the third anomaly segmentation map score into a second one-class support vector machine, to obtain a segmentation map on which an anomaly exists and that corresponds to the cable gland, and mark the segmentation map on which an anomaly exists with a color that is different from a color of a normal segmentation map, to obtain an anomaly representation map.

At this point, the anomaly score and the anomaly representation map that correspond to the cable gland are obtained. Further, FIG. 5 may further include S523: set a value of a pixel at a position at which an anomaly exists and that is in the anomaly representation map to 255, and a value of a pixel at a position at which no anomaly exists and that is in the anomaly representation map to 0, to obtain an anomaly locating map.

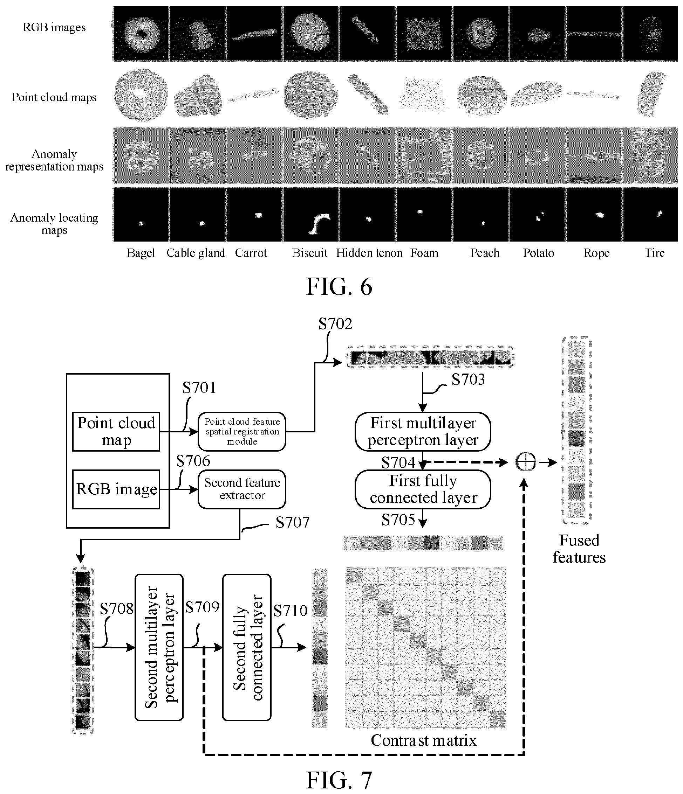

Although three-dimensional industrial anomaly detection is performed on a cable gland in the foregoing embodiment, the three-dimensional industrial anomaly detection method in this application may also be used in other categories of industrial anomaly detection scenarios. FIG. 6 schematically shows anomaly representation maps and anomaly locating maps that are determined after anomaly detection is performed on a plurality of to-be-inspected objects by using a three-dimensional industrial anomaly detection method in this application. As shown in FIG. 6, the to-be-inspected objects are a bagel, a cable gland, a carrot, a biscuit, a hidden tenon, foam, a peach, a potato, a rope, and a tire, respectively. In a first row, there are RGB images corresponding to the to-be-inspected objects. In a second row, there are three-dimensional point cloud maps corresponding to the to-be-inspected objects. In a third row, there are anomaly representation maps that correspond to the to-be-inspected objects and that are generated after three-dimensional industrial anomaly detection is performed. In a fourth row, there are anomaly locating maps that correspond to the to-be-inspected objects and that are generated after three-dimensional industrial anomaly detection is performed.

In an embodiment of this application, before the three-dimensional industrial anomaly detection system is used to perform anomaly detection on a to-be-inspected object, the modules in the three-dimensional industrial anomaly detection system need to be trained, to obtain a three-dimensional industrial anomaly detection system with stable performance. Because the point cloud feature spatial registration module includes only a first feature extractor, and the first feature extractor is a pre-trained feature extractor, the point cloud feature spatial registration module does not need to be trained. The feature fusion module includes a second feature extractor, a first multilayer perceptron, and a second multilayer perceptron. Although the second feature extractor is a pre-trained feature extractor, parameters in the first multilayer perceptron and the second multilayer perceptron need to be optimized. In other words, the feature fusion module needs to be trained. The decision-making layer fusion module includes three memory banks, a learnable first one-class support vector machine, and a learnable second one-class support vector machine. Therefore, the decision-making layer fusion module also needs to be trained. In this embodiment of this application, the feature fusion module and the decision-making layer fusion module are asynchronously trained and both use an unsupervised training mode. Because the feature fusion module and the decision-making layer fusion module both use the unsupervised training mode, manual annotation is not required before the two modules are trained, saving costs for manual annotation.

In an embodiment of this application, the feature fusion module is trained by using patch-based contrastive loss, so that the feature fusion module can fully learn an intrinsic relationship that is between two modalities of colors and three-dimensional point clouds and that exists in training data. For the RGB features $f_{rgb}$ and the point cloud features $f_{pt}$, an objective of training is to encourage more correspondence information for features in different modalities at the same position and less correspondence information for features at different positions.

When a training sample is obtained, an index may be set for the training sample. Because multi-modality information needs to be extracted from an RGB image and a three-dimensional point cloud map that are of each training sample, an RGB image and a three-dimensional point cloud map that correspond to the same training sample, as well as a point cloud projection that is generated after the three-dimensional point cloud map is processed, all correspond to the same index. Further, because the feature fusion module is trained by using patch-based contrastive loss, the RGB image and the point cloud projection further need to be divided, and division criteria used are the same, to ensure that patches formed by dividing the RGB image and tiles formed by dividing the point cloud projection correspond to each other on a one-to-one basis, and to further implement alignment between spatial positions of the RGB features and those of the point cloud features.

Similar to the method for performing three-dimensional industrial anomaly detection on a to-be-inspected object in the foregoing embodiment, $f_{rgb}^{(m,n)}$ is used to represent RGB features of the patches, and $f_{pt}^{(m,n)}$ is used to represent point cloud features of the tiles in this embodiment of this application, where m is an index of a training sample, and n is an index of a patch and a tile that correspond to each other. After RGB features and point cloud features that correspond to the training sample are obtained, a multilayer perceptron (MLP) layer $\{\chi_{rgb}, \chi_{pt}\}$ may be used to extract information about interaction between two modalities, and a fully connected layer $\{\sigma_{rgb}, \sigma_{pt}\}$ may be used to map processed features to query vectors or key vectors. The mapped features are expressed as $\{h_{rgb}^{(m,n)}, h_{pt}^{(m,n)}\}$.

FIG. 7 is a schematic flowchart of unsupervisedly training a feature fusion module. As shown in FIG. 7: S701: input three-dimensional point cloud maps corresponding to batch training samples into a point cloud feature spatial registration module, so that the point cloud feature spatial registration module performs farthest point sampling, nearest neighbor sampling, encoding, interpolation, projection, division, and average pooling on the three-dimensional point cloud maps corresponding to the batch training samples; S702: the point cloud feature spatial registration module outputs a plurality of tiles that form a point cloud projection, and tile point cloud features corresponding to the tiles; S703: input the tile point cloud features corresponding to the tiles into a first multilayer perceptron; S704: the first multilayer perceptron outputs first feature information corresponding to the tiles, and inputs the first feature information into a first fully connected layer; S705: the first fully connected layer outputs first mapped features; S706: divide each RGB image corresponding to the batch training samples into a plurality of patches, and input a patch sequence corresponding to each training sample into a second feature extractor; S707: the second feature extractor outputs RGB features corresponding to the patch sequences; S708: input the RGB features corresponding to the patches into a second multilayer perceptron; S709: the second multilayer perceptron outputs second feature information corresponding to the patches, and inputs the second feature information into a second fully connected layer; and S710: the second fully connected layer outputs second mapped features, to determine a contrastive loss function based on the first mapped features and the second mapped features, perform parameter tuning for the feature fusion module based on the loss function, and obtain a feature fusion module with stable performance.

The contrastive loss function in S710 is an InfoNCE loss function, with a specific expression being as follows:

$$\mathcal{L}_{InfoNCE} = \frac{h_{rgb}^{(m,n)} \cdot h_{pt}^{(m,n)T}}{\sum_{t=1}^{N_b} \sum_{k=1}^{N_p} h_{rgb}^{(t,k)} \cdot h_{pt}^{(t,k)T}}$$

where $N_b$ is a batch size, $N_p$ is a non-zero quantity of tiles, and $T$ is a transform symbol. The batch size is a quantity of training samples included in batch training samples, each training sample has a different index, and the non-zero quantity of tiles is a quantity of patches formed by dividing an RGB image or a quantity of tiles formed by dividing a point cloud projection.

After parameter tuning is performed for the feature fusion module based on the contrastive loss function, the feature fusion module with stable performance is obtained. Based on the feature fusion module, a large amount of correspondence information can be extracted from features in different modalities at the same position, while no correspondence information or a quite small amount of correspondence information can be extracted from features in different modalities at different positions. For example, in a contrast matrix shown in FIG. 7, tiles on a diagonal of the matrix correspond to correspondence information extracted from features in different modalities at the same position, and tiles not on the diagonal correspond to correspondence information extracted from features in different modalities at different positions. The tiles on the diagonal are dark in color, indicating rich correspondence information, while the tiles not on the diagonal are light in color, indicating lack of correspondence information.

After the feature fusion module is trained, the first feature information and the second feature information may be fused, to obtain fused features $f_{fs}$, as indicated by dashed lines in FIG. 7.

In an embodiment of this application, after the feature fusion module is trained, the decision-making layer fusion module may be trained. In this embodiment of this application, anomaly scores and anomaly segmentation map scores that correspond to all training samples are first obtained based on the memory banks $M_{rgb}$, $M_{fp}$, and $M_{fs}$, and the anomaly scores and the anomaly segmentation map scores are then respectively used as training inputs of the first one-class support vector machine and the second one-class support vector machine, to implement unsupervised training with only positive examples.

According to the three-dimensional industrial anomaly detection method in this application, after the RGB image and the three-dimensional point cloud map of the to-be-inspected object are obtained, the three-dimensional point cloud map is first pre-processed to obtain the plurality of point cloud groups. Then, features are extracted from the plurality of point cloud groups by the first feature extractor, to obtain the point cloud feature group, the point cloud feature map is generated based on the point cloud feature group and the three-dimensional point cloud map, and the point cloud feature map is projected to form the point cloud projection that is of the same size as the RGB image; and features are extracted from the RGB image by the second feature extractor, to obtain the RGB features. Then, features are extracted separately from the RGB features and the point cloud features of the point cloud projection by the multilayer perceptron, and the feature information outputted by the multilayer perceptron is fused to obtain the fused features. Finally, anomaly prediction is performed on the to-be-inspected object based on the RGB features, the point cloud features, and the fused features, to obtain the prediction result for the to-be-inspected object. According to this application, multi-modality industrial anomaly detection can be performed based on the three-dimensional point cloud map and the RGB image, and the RGB features and the point cloud features are fused, improving interactivity between features and reducing mutual interference between high-dimensional features. In this way, when anomaly prediction is performed on the to-be-inspected object based on the RGB features, the point cloud features, and the fused features, to obtain the prediction result, a more accurate prediction result can be obtained, improving detection performance and accuracy of a detection result. In addition, an unsupervised manner is used in this application. Manual annotation is not required before anomaly detection is performed, saving costs for manual annotation. Moreover, when preliminary screening for an industrial anomaly is performed by using the technical solutions in this application, costs for manual quality inspection can be reduced.

Although the operations of the method in this application are described in a particular order in the accompanying drawings, this does not require or imply that the operations need to be performed in the particular order or all the operations shown need to be performed so as to implement a desired result. Additionally or alternatively, some operations may be omitted, a plurality of operations may be combined into one operation for execution, one operation may be broken down into a plurality of operations for execution, and/or the like.

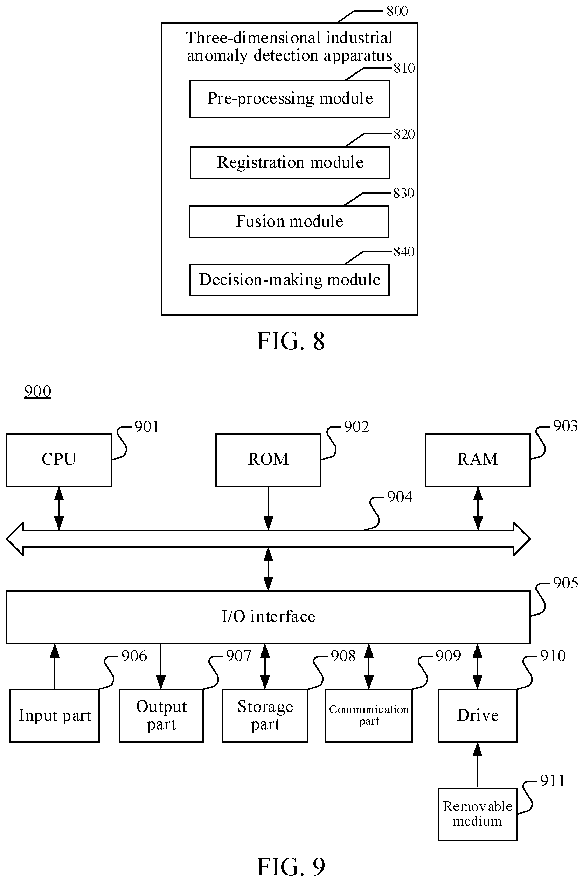

The following describes an apparatus embodiment of this application. An apparatus may be configured to perform the three-dimensional industrial anomaly detection method in the foregoing embodiments of this application. FIG. 8 is a schematic block diagram of a structure of a three-dimensional industrial anomaly detection apparatus according to an embodiment of this application. As shown in FIG. 8, the three-dimensional industrial anomaly detection apparatus 800 includes a pre-processing module 810, a registration module 820, a fusion module 830, and a decision-making module 840. Specifically:

the pre-processing module is configured to: obtain an RGB image and a three-dimensional point cloud map of a to-be-inspected object, and pre-process the three-dimensional point cloud map to obtain a plurality of point cloud groups; the registration module is configured to: extract features from the plurality of point cloud groups by using a first feature extractor, to obtain a point cloud feature group of the plurality of point cloud groups, generate a point cloud feature map based on the point cloud feature group and the three-dimensional point cloud map, and project the point cloud feature map to form a point cloud projection that is of the same size as the RGB image; and extract features from the RGB image by using a second feature extractor, to obtain RGB features of the RGB image; the fusion module is configured to: extract features separately from the RGB features and point cloud features of the point cloud projection by using a multilayer perceptron, and fuse feature information outputted by the multilayer perceptron to obtain fused features; and the decision-making module is configured to perform anomaly prediction on the to-be-inspected object based on the RGB features, the point cloud features, and the fused features, to obtain a prediction result for the to-be-inspected object.

In some embodiments of this application, based on the foregoing technical solutions, the pre-processing module 810 is configured to: perform farthest point sampling on the three-dimensional point cloud map, to obtain a first quantity of sampling points; perform nearest neighbor sampling with the sampling points as center points, to obtain a second quantity of feature points related to each sampling point; and form the plurality of point cloud groups based on each sampling point and the feature points related to the sampling point, the first quantity and the second quantity being integers greater than 1.

In some embodiments of this application, based on the foregoing technical solutions, the registration module 820 includes an interpolation unit, configured to interpolate the point cloud feature group back into the three-dimensional point cloud map based on inverse distance weights, to obtain the point cloud feature map.

In some embodiments of this application, based on the foregoing technical solutions, the interpolation unit is configured to: point cloud features $p'_j$ in the point cloud feature map, weights $\alpha_i$, point cloud features $g_i$ corresponding to the sampling points, and the first quantity M satisfy a first relational expression: $p'_j = \sum_{i=1}^{M} \alpha_i g_i$, $j \in \{1,2,...,N\}$; and the weights $\alpha_i$, the sampling points $c_i$, points $p_j$ corresponding to the sampling points $c_i$ in the point cloud feature map, a minimal constant $\varepsilon$, all sampling points $c_k$, and all points $p_t$ in the three-dimensional point cloud map satisfy a second relational expression:

$$\alpha_i = \frac{\frac{1}{\|c_i - p_j\|_2 + \varepsilon}}{\sum_{k=1}^{M} \sum_{t=1}^{N} \frac{1}{\|c_k - p_t\|_2 + \varepsilon}} \ .$$

In some embodiments of this application, based on the foregoing technical solutions, the registration module 820 is configured to: obtain a first camera parameter that corresponds to the RGB image and a second camera parameter that corresponds to the three-dimensional point cloud map; determine a transformation matrix based on the first camera parameter and the second camera parameter; and project point coordinates in the point cloud feature map based on the transformation matrix, to obtain two-dimensional coordinates corresponding to the point coordinates, and determine the point cloud projection based on the two-dimensional coordinates and point cloud features corresponding to the point coordinates.

In some embodiments of this application, based on the foregoing technical solutions, the registration module 820 is further configured to: set, when the point cloud projection has a point that does not match the point cloud feature map, a value of a pixel at a position corresponding to the point to 0.

In some embodiments of this application, based on the foregoing technical solutions, the three-dimensional industrial anomaly detection apparatus 800 further includes: a first dividing module, configured to: divide the point cloud projection into a plurality of tiles according to a preset division criterion, and perform average pooling on point cloud projections corresponding to the tiles, to obtain tile point cloud features corresponding to each tile; and obtain the point cloud features of the point cloud projection based on the tile point cloud features corresponding to all the tiles.

In some embodiments of this application, based on the foregoing technical solutions, the registration module 820 is configured to: divide the RGB image according to the preset division criterion, to obtain patches of the RGB image; extract features from the patches separately by using the second feature extractor, to obtain RGB features corresponding to each patch; and obtain the RGB features of the RGB image based on the RGB features corresponding to all the patches.

In some embodiments of this application, each tile corresponds to one patch, different tiles correspond to different patches, and the tile and the patch that correspond to each other have the same index. Based on the foregoing technical solutions, the fusion module 830 is configured to: extract features from the RGB features of the patches and the tile point cloud features of the tiles by using the multilayer perceptron, to obtain first feature information of the patches and second feature information of the tiles, there being correspondences between the patches and the tiles; and fuse the first feature information of the patches and the second feature information of the tiles, to obtain the fused features, there being correspondences between the patches and the tiles.

In some embodiments of this application, based on the foregoing technical solutions, the decision-making module 840 is configured to: determine a first anomaly score for the to-be-inspected object based on a first scoring function, a first memory bank, and the RGB features, determine a second anomaly score for the to-be-inspected object based on the first scoring function, a second memory bank, and the point cloud features, and determine a third anomaly score for the to-be-inspected object based on the first scoring function, a third memory bank, and the fused features; and input the first anomaly score, the second anomaly score, and the third anomaly score into a first one-class support vector machine, to obtain an anomaly score for the to-be-inspected object, the first memory bank being configured to store original color features of an inspected object, the second memory bank being configured to store point cloud features of the inspected object, and the third memory bank being configured to store fused features of the inspected object.

In some embodiments of this application, based on the foregoing technical solutions, the decision-making module 840 is configured to: determine a first anomaly segmentation map score for the to-be-inspected object based on a second scoring function, the first memory bank, and the RGB features, determine a second anomaly segmentation map score for the to-be-inspected object based on the second scoring function, the second memory bank, and the point cloud features, and determine a third anomaly segmentation map score for the to-be-inspected object based on the second scoring function, the third memory bank, and the fused features; input the first anomaly segmentation map score, the second anomaly segmentation map score, and the third anomaly segmentation map score into a second one-class support vector machine, to obtain a segmentation map on which an anomaly exists and that corresponds to the to-be-inspected object; and mark the segmentation map on which an anomaly exists with a color that is different from a color of a normal segmentation map, to obtain an anomaly representation map.

In some embodiments of this application, based on the foregoing technical solutions, an expression of the first

scoring function is: $\phi(M, f) = \eta\|f^{(i,j),*} - m^*\|_2$, where $f^{(i,j),*}, m^* = \arg\max_{f^{(i,j)} \in f} \arg\min_{m \in M}\|f^{(i,j)} - m\|_2$, M is the first memory bank, the second memory bank, or the third memory bank, f is the RGB features, the point cloud features, or the fused features, $\eta$ is a weight parameter, i is an index corresponding to the RGB image or the point cloud projection, and j is an index corresponding to a patch in the RGB image or a tile in the point cloud projection.

In some embodiments of this application, based on the foregoing technical solutions, an expression of the second scoring function is: $\varphi(M, f) = \{\min_{m \in M}\|f^{(i,j)} - m\|_2 \mid f^{(i,j)} \in f\}$, where M is the first memory bank, the second memory bank, or the third memory bank, f is the RGB features, the point cloud features, or the fused features, i is an index corresponding to the RGB image or the point cloud projection, and j is an index corresponding to a patch in the RGB image or a tile in the point cloud projection.

Specific details of the three-dimensional industrial anomaly detection apparatus provided in embodiments of this application are described in detail in the corresponding method embodiments. Therefore, details are not described herein again.

FIG. 9 is a schematic block diagram of a structure of a computer system of an electronic device configured to implement an embodiment of this application. The electronic device may be the terminal device 101 or the server 102 shown in FIG. 1.

The computer system 900 of the electronic device shown in FIG. 9 is merely an example, and shall not impose any limitation on the functionality and scope of use of embodiments of this application.

As shown in FIG. 9, the computer system 900 includes a central processing unit (CPU) 901, which may execute various proper actions and processing based on a program stored in a read-only memory (ROM) 902 or a program loaded from a storage part 908 into a random access memory (RAM) 903. The random access memory 903 further stores various programs and data required for system operations. The central processing unit 901, the read-only memory 902, and the random access memory 903 are connected to each other via a bus 904. An input/output interface (that is, an I/O interface) 905 is also connected to the bus 904.

In some embodiments, the following parts are connected to the input/output interface 905: an input part 906 including a keyboard, a mouse, or the like; an output part 907 including a cathode ray tube (CRT), a liquid crystal display (LCD), a loudspeaker, or the like; the storage part 908 including a hard disk, or the like; and a communication part 909 including a network interface card such as a local area network card or a modem. The communication part 909 performs communication processing by using a network such as the Internet. A drive 910 is also connected to the input/output interface 905 as needed. A removable medium 911, such as a magnetic disk, an optical disc, a magneto-optical disk, or a semiconductor memory, is installed on the drive 910 as required, so that a computer program read from the removable medium 911 is installed into the storage part 908 as required.

Particularly, according to this embodiment of this application, the processes described in each method flowchart may be implemented as a computer software program. For example, this embodiment of this application includes a computer program product, the computer program product includes a computer program carried in a computer-readable medium, and the computer program includes program code used for performing the methods shown in the flowcharts. In such an embodiment, the computer program may be downloaded and installed from a network through the communication part 909, and/or installed from the removable medium 911. When the computer program is executed by the central processing unit 901, various functions defined in the system of this application are performed.

The computer-readable medium described in this embodiment of this application may be a computer-readable signal medium, a computer-readable storage medium, or any combination thereof. The computer-readable medium may be, for example, but is not limited to, an electric, magnetic, optical, electromagnetic, infrared, or semi-conductive system, apparatus, or device, or any combination thereof. More specific examples of the computer-readable medium may include, but are not limited to: an electrical connection having one or more wires, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any appropriate combination thereof. In this application, the computer-readable medium may be any tangible medium containing or storing a program, and the program may be used by or used in combination with an instruction execution system, apparatus, or device. Moreover, in this application, the computer-readable signal medium may include a data signal propagated in a baseband or as part of a carrier, and computer-readable program code is carried therein. A data signal propagated in such a way may assume a plurality of forms, including, but not limited to, an electromagnetic signal, an optical signal, or any appropriate combination thereof. The computer-readable medium may alternatively be any computer-readable medium other than a computer-readable signal medium. The computer-readable medium may transmit, propagate, or transport a program that is used by or used in combination with an instruction execution system, apparatus, or device. The program code included in the computer-readable medium may be transmitted by any appropriate medium, including, but not limited to: a wireless medium, a wired medium, or any appropriate combination thereof.

The flowcharts and block diagrams in the accompanying drawings illustrate architectures, functions, and operations in possible implementations of the system, method, and computer program product according to various embodiments of this application. In this regard, each box in a flowchart or a block diagram may represent a module, a program segment, or a part of code. The module, the program segment, or the part of code includes one or more executable instructions used for implementing specified logic functions. In some implementations used as substitutes, functions specified in boxes may be alternatively performed in a different order than that specified in an accompanying drawing. For example, functions specified in two boxes shown in succession may actually be performed basically in parallel, or sometimes may be performed in a reverse order, depending on functions related. A function specified in each box in a block diagram or flowchart, and functions specified in a combination of boxes in a block diagram or flowchart may be implemented by a dedicated hardware-based system that performs a specified function or operation, or may be implemented by a combination of dedicated hardware and computer instructions.

Although a plurality of modules or units of a device configured to perform actions are discussed in the foregoing detailed descriptions, such division is not mandatory. Actually, according to the implementations of this application, the features and functions of two or more modules or units described above may be embodied in one module or unit. On the contrary, the features and functions of one module or unit described above may be further divided to be embodied by a plurality of modules or units.

According to the foregoing descriptions of the implementations, persons skilled in the art readily understand that the exemplary implementations described herein may be implemented by software, or may be implemented by a combination of software and necessary hardware. Therefore, the technical solutions according to the implementations of this application may be implemented in a form of a software product. The software product may be stored in a non-volatile storage medium (which may be a CD-ROM, a USB flash drive, a removable hard disk, or the like) or on a network, including several instructions for instructing an electronic device to perform the method according to the implementations of this application.

After considering the specification and practicing the present disclosure, persons skilled in the art easily conceive of other implementation solutions of this application. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the accompanying drawings, and various modifications and changes can be made without departing from the scope of this application. The scope of this application is subject only to the appended claims.

**Claims**

1. A three-dimensional image processing-based object anomaly detection method, the method being performed by an electronic device and comprising:

   obtaining an RGB image and a plurality of point cloud groups of a three-dimensional point cloud map of a to-be-inspected object;
   performing first feature extraction on each of the plurality of point cloud groups, to obtain a point cloud feature group of the plurality of point cloud groups, and projecting the point cloud feature group to obtain the projected point cloud feature of the plurality of point cloud groups; and performing second feature extraction on the RGB image to obtain an RGB feature;
   inputting the projected point cloud feature and the RGB feature to a multilayer perceptron, and fusing feature information outputted by the multilayer perceptron to obtain a fused feature; and
   performing anomaly prediction on the to-be-inspected object based on the RGB feature, the projected point cloud feature, and the fused feature, to obtain a prediction result for the to-be-inspected object.

2. The method according to claim 1, wherein the plurality of point cloud groups are obtained by performing pre-processing operations on the three-dimensional point cloud map, the pre-processing operations comprising:

   performing farthest point sampling on the three-dimensional point cloud map, to obtain a first quantity of sampling points;
   performing nearest neighbor sampling by using each of the sampling points as a center point, to obtain a second quantity of feature points related to each sampling point; and
   forming the plurality of point cloud groups based on each sampling point and the feature points related to the sampling point,

the first quantity and the second quantity being integers greater than 1.

3. The method according to claim 1, wherein the method further comprises: generating a point cloud feature map based on the point cloud feature group and the three-dimensional point cloud map comprises:
interpolating the point cloud feature group to the three-dimensional point cloud map based on inverse distance weights, to obtain the point cloud feature map.

4. The method according to any one of claims 1 to 3, wherein the projecting the point cloud feature group to obtain the projected point cloud feature of the plurality of point cloud groups comprises: projecting the point cloud feature map into a point cloud projection that is of a same size as the RGB image by:

obtaining a first camera parameter that corresponds to the RGB image and a second camera parameter that corresponds to the three-dimensional point cloud map;
determining a transformation matrix based on the first camera parameter and the second camera parameter; and
projecting point coordinates in the point cloud feature map based on the transformation matrix, to obtain two-dimensional coordinates corresponding to the point coordinates, and determining the point cloud projection based on the two-dimensional coordinates and point cloud features corresponding to the point coordinates.

5. The method according to claim 4, wherein the method further comprises:
setting, when the point cloud projection has a point that does not match the point cloud feature map, a value of a pixel at a position corresponding to the point to 0.

6. The method according to claim 4, wherein the method further comprises:

dividing the point cloud projection into a plurality of tiles according to a preset division criterion, and performing average pooling on point cloud projections corresponding to the tiles, to obtain tile point cloud features corresponding to each tile; and
obtaining the point cloud features of the point cloud projection based on the tile point cloud features corresponding to all the tiles.

7. The method according to claim 6, wherein the performing second feature extraction on the RGB image to obtain an RGB feature comprises:

dividing the RGB image according to the preset division criterion, to obtain patches of the RGB image;
performing the second feature extraction on each of the patches by using a second feature extractor, to obtain a RGB patch feature corresponding to each patch; and
obtaining the RGB feature of the RGB image based on RGB patch features of the patches.

8. The method according to claim 7, wherein each tile corresponds to one patch, different tiles correspond to different patches, and a tile and a patch having a one-to-one correspondence have a same index; and
the inputting the projected point cloud feature and the RGB feature to a multilayer perceptron, and fusing feature information outputted by the multilayer perceptron to obtain a fused feature comprises:

for the tile and the patch having a one-to-one correspondence,
inputting the RGB feature of the patch and the tile point cloud feature of the tile to the multilayer perceptron, to obtain first feature information of the patch and second feature information of the tile; and
fusing the first feature information of the patch and the second feature information of the tile, to obtain a fused feature.

9. The method according to any one of claims 1 to 3, wherein the prediction result for the to-be-inspected object comprises an anomaly score for the to-be-inspected object, and the performing anomaly prediction on the to-be-inspected object based on the RGB features, the point cloud features, and the fused features, to obtain a prediction result for the to-be-inspected object comprises:

determining a first anomaly score for the to-be-inspected object based on a first scoring function, a first memory bank, and the RGB features, determining a second anomaly score for the to-be-inspected object based on the first scoring function, a second memory bank, and the point cloud features, and determining a third anomaly score for the to-be-inspected object based on the first scoring function, a third memory bank, and the fused features; and

inputting the first anomaly score, the second anomaly score, and the third anomaly score into a first one-class support vector machine, to obtain the anomaly score for the to-be-inspected object,

the first memory bank being configured to store original color features of an inspected object, the second memory bank being configured to store point cloud features of the inspected object, and the third memory bank being configured to store fused features of the inspected object.

10. The method according to claim 9, wherein the prediction result for the to-be-inspected object comprises an anomaly representation map for the to-be-inspected object, and the performing anomaly prediction on the to-be-inspected object based on the RGB features, the point cloud features, and the fused features, to obtain a prediction result for the to-be-inspected object comprises:

determining a first anomaly segmentation map score for the to-be-inspected object based on a second scoring function, the first memory bank, and the RGB features, determining a second anomaly segmentation map score for the to-be-inspected object based on the second scoring function, the second memory bank, and the point cloud features, and determining a third anomaly segmentation map score for the to-be-inspected object based on the second scoring function, the third memory bank, and the fused features;

inputting the first anomaly segmentation map score, the second anomaly segmentation map score, and the third anomaly segmentation map score into a second one-class support vector machine, to obtain a segmentation map on which an anomaly exists and that corresponds to the to-be-inspected object; and

marking the segmentation map on which an anomaly exists with a color that is different from a color of a normal segmentation map, to obtain the anomaly representation map.

11. A three-dimensional industrial anomaly detection apparatus, the apparatus being deployed on an electronic device and comprising:

an obtaining module, configured to: obtain an RGB image and a plurality of point cloud groups of a three-dimensional point cloud map of a to-be-inspected object;

a registration module, configured to: perform first feature extraction on each of the plurality of point cloud groups, to obtain a point cloud feature group of the plurality of point cloud groups, and project the point cloud feature group to obtain the projected point cloud feature of the plurality of point cloud groups; and perform second feature extraction on the RGB image to obtain an RGB feature;

a fusion module, configured to: input the projected point cloud feature and the RGB feature to a multilayer perceptron, and fuse feature information outputted by the multilayer perceptron to obtain a fused feature; and

a decision-making module, configured to perform anomaly prediction on the to-be-inspected object based on the RGB feature, the projected point cloud feature, and the fused feature, to obtain a prediction result for the to-be-inspected object.

12. A computer-readable storage medium, having a computer program stored therein, the computer program, when being executed by a processor, implementing the three-dimensional industrial anomaly detection method according to any one of claims 1 to 10.

13. An electronic device, comprising:

a processor; and

a memory, configured to store a computer program,

the processor being configured to implement the three-dimensional industrial anomaly detection method according to any one of claims 1 to 10 by executing the computer program stored in the memory.

14. A computer program product, the computer program product comprising a computer program, and the computer program, when being run on a computer, enabling the computer to perform the three-dimensional industrial anomaly detection method according to any one of claims 1 to 10.

FIG. 1

S210

Obtain an RGB image and a three-dimensional point cloud map of a to-be-inspected object, and pre-process the three-dimensional point cloud map to obtain a plurality of point cloud groups

S220

Extract features from the plurality of point cloud groups by using a first feature extractor, to obtain a point cloud feature group of the plurality of point cloud groups, generate a point cloud feature map based on the point cloud feature group and the three-dimensional point cloud map, and project the point cloud feature map to form a point cloud projection that is of the same size as the RGB image; and extract features from the RGB image by using a second feature extractor, to obtain RGB features of the RGB image

S230

Extract features separately from the RGB features and point cloud features of the point cloud projection by using a multilayer perceptron, and fuse feature information outputted by the multilayer perceptron to obtain fused features

S240

Perform anomaly prediction on the to-be-inspected object based on the RGB features, the point cloud features, and the fused features, to obtain a prediction result for the to-be-inspected object

FIG. 2

S301

Obtain a first camera parameter that corresponds to an RGB image and a second camera parameter that corresponds to a three-dimensional point cloud map

S302

Determine a transformation matrix based on the first camera parameter and the second camera parameter

S303

Project point coordinates in a point cloud feature map based on the transformation matrix, to obtain two-dimensional coordinates corresponding to the point coordinates, and determine a point cloud projection based on the two-dimensional coordinates and point cloud features corresponding to the point coordinates

FIG. 3

400

Three-dimensional industrial anomaly detection system

401        402        403

Point cloud feature spatial registration module → Feature fusion module → Decision-making layer fusion module

FIG. 4

FIG. 5

FIG. 6

FIG. 7

FIG. 8

FIG. 9

## INTERNATIONAL SEARCH REPORT

| International application No. |
| --- |
| **PCT/CN2024/078580** |

| | |
| --- | --- |
| **A.** | **CLASSIFICATION OF SUBJECT MATTER** |
| | G06T 7/00(2017.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 三维, 工业, 异常, 检测, RGB, 点云, 特征, 提取, 投影, 融合, 预测, 多模态, transformer, 3D, industrial, detection, cloud, feature, extraction, projection, fusion, prediction

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 116958027 A (TENCENT TECHNOLOGY (SHANGHAI) CO., LTD.) 27 October 2023 (2023-10-27)<br>claims 1-14 | 1-14 |
| A | CN 115496923 A (BEIJING UNIVERSITY OF CHEMICAL TECHNOLOGY) 20 December 2022 (2022-12-20)<br>description, paragraphs [0062]-[0089] | 1-14 |
| A | CN 114648686 A (HARBIN ENGINEERING UNIVERSITY) 21 June 2022 (2022-06-21)<br>entire document | 1-14 |
| A | CN 114494134 A (CROSS-BORDER CLOUD (HENGQIN) TECHNOLOGY INNOVATION RESEARCH CENTER CO., LTD.) 13 May 2022 (2022-05-13)<br>entire document | 1-14 |
| A | US 11403860 B1 (ECOTRON CORP.) 02 August 2022 (2022-08-02)<br>entire document | 1-14 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2024** | **10 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/078580**

| Patent document cited in search report | | | Publication date (day/month/year) | Patent family member(s) | Publication date (day/month/year) |
|---|---|---|---|---|---|
| CN | 116958027 | A | 27 October 2023 | None | |
| CN | 115496923 | A | 20 December 2022 | None | |
| CN | 114648686 | A | 21 June 2022 | None | |
| CN | 114494134 | A | 13 May 2022 | None | |
| US | 11403860 | B1 | 02 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310194447